# EUROPEAN PATENT SPECIFICATION

(11) **EP 3 129 306 B1**
(45) Date of publication and mention of the grant of the patent: **02.05.2018**
(21) Application number: 15712556.8
(22) Date of filing: 17.03.2015
(51) Int. Cl.: B65G 1/137

(54) **A MULTI-STOREY GOODS STORAGE ARRANGEMENT**
VIELSTÖCKIGE WARENLAGERUNGSANORDNUNG
AGENCEMENT DE STOCKAGE DE MARCHANDISES À PLUSIEURS ÉTAGES

(30) Priority: 10.04.2014 SE 1450444
(43) Date of publication of application: 15.02.2017
(73) Proprietor: Nedcon B.V., 7005 BJ Doetinchem (NL)
(72) Inventor: HUISKAMP, Hendrik, Christiaan, NL-7108 BP Winterswijk Woold (NL)
(74) Representative: Bungartz Christophersen Partnerschaft mbB Patentanwälte
(86) International application number: PCT/EP2015/055570
(87) International publication number: WO 2015/154954

(56) References cited:
- EP-A1- 0 559 604

## Description

The present invention relates to a multi-storey goods storage arrangement comprising a plurality of levels of storage lines arranged in parallel to each other and extending in opposite directions from and perpendicular to a transport line, each storage line being arranged to support a plurality of load carriers, and at least one picking line arranged at least at one side of the transport line, with each picking line comprising a picking robot operable along and over the picking line to pick goods stored on one load carrier and to place the goods on another load carrier. Thus the picking robot is to pick up automatically items from a first pallet and to place automatically the items on a second pallet forming a mixed pallet.
Multi-storey goods storage arrangements or pallet racks are used in a wide area of applications, such as conventional warehouses, storages and stores. Goods, such as packages or cases, are normally arranged on load carriers, such as pallets, board gitterboxes, etc. that are transported in the multi-storey goods storage arrangement by different kinds of carts, carriages, shuttles and conveyors. In automated multi-storey goods storage arrangements the carriages, shuttles and conveyors are controlled by computer systems and pick up, transport, store and deliver goods without human influence.

In some multi-storey goods storage arrangements manual picking from pallets on a picking line is used to combine different objects from different pallets into mixed pallets for delivery or packaging. Pallets with selected goods may be collected automatically from the multi-storey goods storage arrangement to the picking line. A mixed pallet is then manually put together and the collected pallets with remaining goods are again dispatched in the multi-storey goods storage arrangement.

Document EP 0 559 604 A discloses a multi-storey goods storage system according to the preamble of claim 1 and a method of providing a mixed load carrier according to the preamble of claim 10. It would be desirable to improve the process in prior art multi-storey goods storage arrangements of putting together a mixed load carrier or ready pallet of different items or goods.

The multi-storey goods storage arrangement in accordance with the invention is as stated in the appended claim 1. The mixed pallet then can be dispatched from the multi-storey goods storage arrangement while pallets from which items have been picked up automatically are returned to the multi-storey goods storage arrangement.

According to another embodiment of the storage arrangement, the picking robot is supported by a robot support extending along the picking line, and the picking robot is arranged to be positioned at different positions along the robot support.
According to another embodiment, the load carrier to pick goods from, and the load carrier to place goods on are both placed in the same picking line.
According to another embodiment there is at least one return line on every level, with each return line arranged adjacent to a picking line. The return line comprises a goods conveyer for transporting load carriers to the transport line.
According to another embodiment, each level comprises at least one picking line and one return line.
According to another embodiment, a transfer cart is operable along each transport line.
According to another embodiment, the transfer cart supports at least one shuttle operable from the transfer cart into said storage lines for picking up and for disposing goods.
The storage arrangement may also comprise a goods elevator arranged to transport goods between different levels. The goods elevator can be arranged at an end of a picking line opposite to a transport line.
According to the invention a method of providing a mixed load carrier of different items stored on load carriers on a plurality of levels of storage lines arranged in parallel to each other and extending in opposite directions from and perpendicular to a transport line, with a picking robot operating along a picking line and with the picking robot automatically picking up items from a first load carrier and automatically placing the items on a second load carrier forming a mixed load carriers is characterised in that the picking line is arranged to replace a storage line at each level at one side of a transport line.
It is preferred that the method also comprises placing both the first load carrier and the second load carrier in the picking line during the operation of the picking robot. It is further preferred to transfer the first load carrier from said picking line to a return line arranged adjacent to the picking line at the same level, collecting said first load carrier on said return line and transporting it back to a storage line. It is further preferred to transport a mixed load carrier from said picking line to an output arrangement.

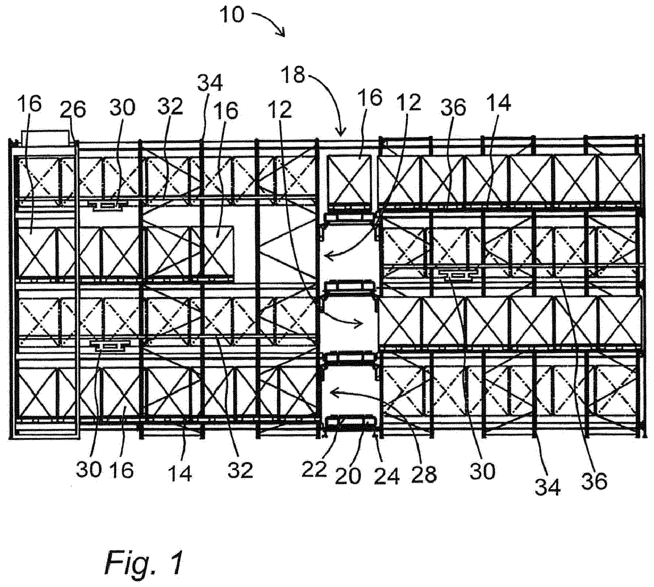

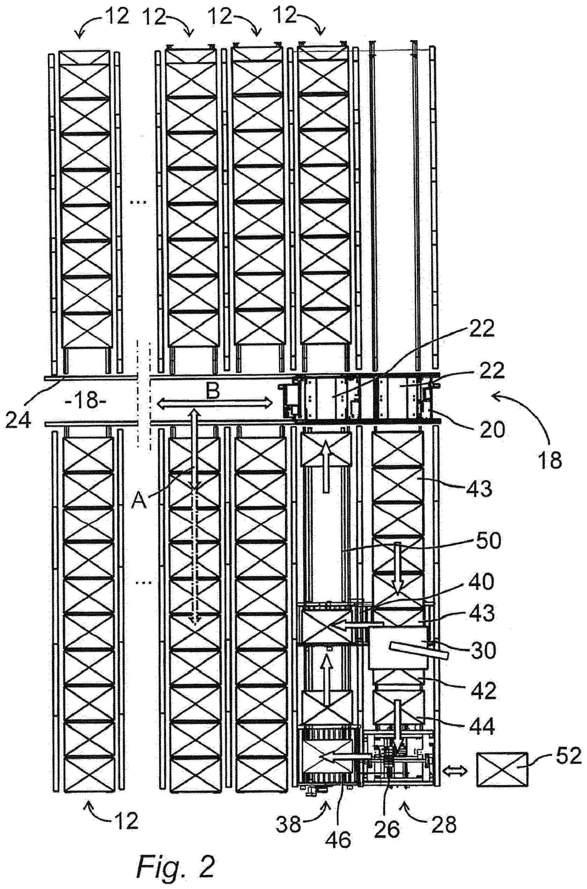

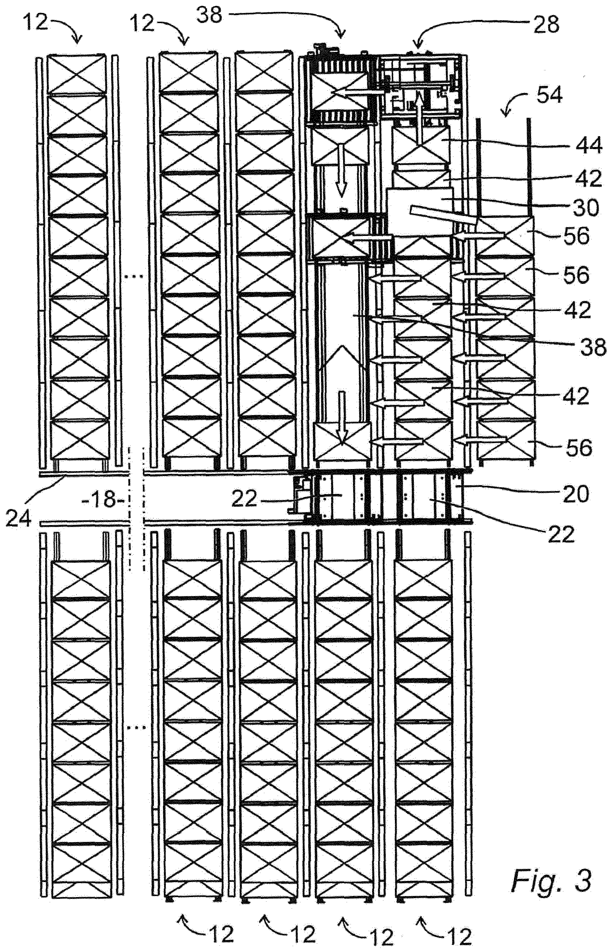

A more particular description of the invention briefly described above will be rendered by reference to specific embodiments thereof which are illustrated in the appended drawings, with these drawings depicting typical embodiments of the invention. Thus, the invention will be described and explained with additional specificity and detail through the use of the accompanying drawings in which:
- Fig. 1: is a schematic side view of a first embodiment of a multi-storey goods storage arrangement in accordance with the invention,
- Fig. 2: is a schematic top view of the embodiment of a multi-storey goods storage arrangement shown in Fig. 1,
- Fig. 3: is a schematic top view of a second embodiment of a multi-storey goods storage arrangement.
In the embodiment shown in Fig. 1 and Fig. 2 a multi-storey goods storage arrangement or pallet rack 10 comprises four levels or floors of storage lines 12 in which load carriers 14 are stored. The load carriers 14 are pallets with goods 16 placed on the pallets. The storage lines 12 extend in two opposite directions from and perpendicular to a transport line 18, with also said transport lines 18 being arranged in four levels or floors. In each transport line 18 a transfer cart 20 supporting two shuttles 22 operates along the transport line 18 and in a direction perpendicular to the storage lines 12. Each transfer cart 20 runs on rails 24. At a storage line or at an extension of a storage line an elevator 26 is arranged to transport carriers in a vertical direction.
It should be noted that a plurality of storage lines 12 are arranged at each level along said transport line 18. Normally each load carrier 14 or pallet in storage lines 12 supports only one type of articles or goods 16.
Each shuttle 22 is arranged to move away from the transfer cart 20 into said storage lines 12 carrying goods, preferably supported by the carriers or pallets. The carriers can be transported by the shuttle 22 along a storage line 12 to be placed at a selected position in the storage line 12. Carriers also can be picked up at a selected position by the same shuttle 22 and transported to the transfer cart 20 which then will transport the loaded carrier along the transport line 18 to a selected new storage line 12 or to different kinds of lines as will be described below with reference to Fig. 2 and Fig. 3.

According to Fig. 1 and Fig. 2, at each level a picking line 28 is arranged at at least one side of the transport line 18. Alternatively, picking lines 28 can be arranged at both sides of the transport line 18. The picking line 28 replaces an outmost storage line and is fed by the shuttle 22.

In the picking line 28 a picking robot 30 is arranged to pick goods stored on one pallet 43 and to place the goods on another pallet 42. Both pallets 43, 42 are arranged on rails or other support arrangements along the picking line 28. Each picking robot 30 is supported by a robot support 32 extending along the picking line 28. The picking robot 30 is movable on the robot support 32 to place the robot 30 in different length positions along the picking line 28. The picking robot 30 is arranged to move goods at least between two adjacent pallets.

The multi-storey goods storage arrangement basically is a pallet racking with a plurality of uprights 34 and horizontal load beams 36. The uprights 34 can be designed to fasten rails 24 for supporting the transfer cart 20. The load beams 36 can be designed as or include rails for supporting the shuttle 22. Conventional diagonal braces and horizontal braces can also be used.

The top view of one level of one embodiment of a multi-storey goods storage arrangement in accordance with the invention of Fig. 2 shows a plurality of storage lines 12 in which a plurality of pallets with goods 16 are stored. At the level shown in Fig. 2 one storage line is replaced by a picking line 28 and another storage line is replaced by a return line 38. Pallets with goods partly picked up by the picking robot 30 and goods partly left are transferred to the return line 38. In various embodiments such pallets are transferred on conveyors, such as roller conveyors 40.

Pallets with goods are collected by the shuttles 22 at various storage lines 12 and then placed by the transfer cart 20 or by the shuttle 22 on the picking line 28. Goods are picked up from such pallet, now referred to as a collected pallet 43, by the picking robot 30 and placed on a picking pallet 42. Goods from different collected pallets 43 can be combined on one picking pallet 42. When goods are remaining on a collected pallet 43 the pallet is returned to the return line 38 where it is collected by the transfer cart 20 or by the shuttle 22 for further transport back to a storing line.

A completed picking pallet 42, now referred to as a ready pallet 44, is transported further down on the picking line 28 to an output arrangement such as the elevator 26. The ready pallet 44 carries different goods or articles combined for delivery to a customer. Goods normally are received to and delivered from the multi-storey goods storage arrangement via the elevator 26. Goods can be transported from the elevator to the return line 38 by a conveyor, such as an input roller conveyor 46.

In the embodiment shown in Fig. 2 the transfer cart 20 carries two shuttles 22. Each shuttle 22 independently picks up and places goods on pallets at different position along the storage lines 12 as indicated by arrow A. The transfer cart 20 moves, supported by the rails 24, along arrow B in the transport line 18.

A plurality of collected pallets 43 is provided on the picking line 28 and goods and articles will be picked up from them for setting up combined and ready pallets 44.

A separate pallet magazine (not shown) is used to catch up pallets that have become empty after picking from.

A chain conveyor 50 is provided in the return line 38 and is used to transport pallets with goods back to the transfer cart 20. The chain conveyor 50 may also transport ready pallets 44 that are to be further stored in storage lines 12, and input pallets 52 received via the elevator 26.

The embodiment of multi-storey goods storage arrangement in accordance with the invention shown in Fig. 3 in most aspects corresponds to the embodiment shown in Fig. 2. One difference is that a pallet line 54 is provided outside or in front of the picking line 28. Exchange pallets 56 disposed on pallet line 54 replace picking pallets 42 when the picking pallets 42 are moved back via the return line 38. The picking robot 30 is arranged to move along the picking line 28 to pick goods or articles from a plurality of picking pallets 42.

Also in the embodiment shown in Fig. 3 a transfer cart 20 runs on rails 24 arranged in the transport line 18. The rails 24 are fastened to the uprights 34. The transfer cart 20 carries two shuttles 22 that autonomously run along said storage lines 12 to pick up and to dispose pallets.

### List of references

- 10: pallet rack
- 12: storage line
- 14: pallet
- 16: pallet with goods
- 18: transport line
- 20: transfer cart
- 22: shuttle
- 24: rail
- 26: elevator
- 28: picking line
- 30: picking robot
- 32: robot support
- 34: upright
- 36: load beam
- 38: return line
- 40: roller conveyor
- 42: picking pallet
- 43: collected pallet
- 44: ready pallet
- 46: input roller conveyor
- 50: chain conveyor
- 52: input pallet
- 54: pallet line
- 56: exchange pallet

## Claims

1. A multi-storey goods storage arrangement comprising a plurality of levels of storage lines (12) arranged in parallel to each other and extending in opposite directions from and perpendicular to a transport line (18), each storage line (12) being arranged to support a plurality of load carriers (14), and at least one picking line (28) arranged at least at one side of the transport line (18), with each picking line (28) comprising a picking robot (30) operable along and over the picking line (28) to pick goods stored on one load carrier (43) and to place the goods on another load carrier (42, 44)
**characterised in that**
it comprises at least one picking line (28) on each level, whereby said picking line is arranged to replace a storage line (12) at one side of a transport line (18).

2. A storage arrangement as claimed in claim 1, wherein the picking robot (30) is supported by a robot support (32) extending along the picking line (28), and wherein the picking robot (30) is arranged to be positioned at different positions along the robot support (32).

3. A storage arrangement as claimed in claim 1 or 2 wherein the load carrier (43) to pick goods from, and the load carrier (42) to place goods on are both placed in the picking line (28).

4. A storage arrangement as claimed in anyone of the preceding claims, also comprising return lines (38), each return line arranged adjacent to a picking line (28), wherein each return line (38) comprises a goods conveyer (50) for transporting load carriers to the transport line (18).

5. A storage arrangement as claimed in claim 4, wherein each level comprises at least one picking line (28) and one return line (38).

6. A storage arrangement as claimed in anyone of the preceding claims, wherein a transfer cart (20) is operable along each transport line (18).

7. A storage arrangement as claimed in claim 6, wherein said transfer cart (20) supports at least one shuttle (22) operable from the transfer cart (20) into said storage lines (12) for picking up and for disposing goods.

8. A storage arrangement as claimed in anyone of the preceding claims, also comprising a goods elevator (26) arranged to transport goods between different levels.

9. A storage arrangement as claimed in claim 8, wherein the goods elevator (26) is arranged at an end of a picking line (28) opposite to a transport line (18).

10. A method of providing a mixed load carrier of different items stored on load carriers (14) on a plurality of levels of storage lines (12) arranged in parallel to each other and extending in opposite directions from and perpendicular to a transport line (18), with a picking robot (30) operating along a picking line (28) and with the picking robot (30) automatically picking up items from a first load carrier (43) and automatically placing the items on a second load carrier (42, 44) forming a mixed load carrier
**characterised in that,**
the picking line (28) is arranged to replace a storage line (12) at each level at one side of a transport line (18).

11. A method as claimed in claim 10 also comprising placing both the first load carrier (43) and the second load carrier (42) in the picking line (28) during the operation of the picking robot (30).

12. A method as claimed in claim 10 or 11, also comprising transferring the first load carrier (43) from said picking line (28) to a return line (38) arranged adjacent to the picking line (28) at the same level, collecting said first load carrier (43) on said return line (38) and transporting it back to a storage line (12).

13. A method as claimed in anyone of the claims 10 to 12, also comprising transporting a mixed load carrier (44) from said picking line (28) to an output arrangement.

## Patentansprüche

1. Vielstöckige Warenlagerungsanordnung, die eine Vielzahl an Ebenen von Lagerungslinien (12), die parallel zueinander angeordnet sind und sich in entgegengesetzten Richtungen von einer Transportlinie (18) und rechtwinklig zu derselben erstrecken, wobei jede Lagerungslinie (12) so angeordnet ist, dass sie eine Vielzahl von Lastträgern (14) trägt, und wenigstens eine Pick-Linie (28) umfasst, die wenigstens auf einer Seite der Transportlinie (18) angeordnet ist, wobei jede Pick-Linie (28) einen Pick-Roboter (30) umfasst, der entlang und über der Pick-Linie (28) steuerbar ist, um Waren, die auf einem Lastträger (43) gelagert sind, aufzunehmen und die Waren auf einem anderen Lastträger (42, 44) zu platzieren,
**dadurch gekennzeichnet, dass**
sie wenigstens eine Pick-Linie (28) auf jeder Ebene umfasst, wobei die Pick-Linie so angeordnet ist, dass sie eine Lagerungslinie (12) auf einer Seite einer Transportlinie (18) ersetzt.

2. Lagerungsanordnung nach Anspruch 1, wobei der Pick-Roboter (30) durch eine Robotertragvorrichtung (32) getragen ist, die sich entlang der Pick-Linie (28) erstreckt, und wobei der Pick-Roboter (30) so angeordnet ist, dass er an unterschiedlichen Positionen entlang der Robotertragvorrichtung (32) positioniert ist.

3. Lagerungsanordnung nach Anspruch 1 oder 2, wobei der Lastträger (43), von dem Waren aufgenommen werden, und der Lastträger (42), auf dem Waren platziert werden, beide in der Pick-Linie (28) platziert sind.

4. Lagerungsanordnung nach einem der vorhergehenden Ansprüche, die außerdem Rückführlinien (38) umfasst, die jeweils angrenzend an eine Pick-Linie (28) angeordnet sind, wobei jede Rückführlinie (38) ein Warentransportband (50) umfasst, um Lastträger zu der Transportlinie (18) zu transportieren.

5. Lagerungsanordnung nach Anspruch 4, wobei jede Ebene wenigstens eine Pick-Linie (28) und eine Rückführlinie (38) umfasst.

6. Lagerungsanordnung nach einem der vorhergehenden Ansprüche, wobei ein Übergabewagen (20) entlang jeder Transportlinie (18) steuerbar ist.

7. Lagerungsanordnung nach Anspruch 6, wobei der Übergabewagen (20) wenigstens eine Shuttle-Vorrichtung (22) trägt, die von dem Übergabewagen (20) in die Lagerungslinien (12) steuerbar ist, um Waren aufzunehmen und abzulegen.

8. Lagerungsanordnung nach einem der vorhergehenden Ansprüche, die außerdem einen Warenaufzug (26) umfasst, der so angeordnet ist, dass er Waren zwischen verschiedenen Ebenen transportiert.

9. Lagerungsanordnung nach Anspruch 8, wobei der Warenaufzug (26) an einem Ende einer Pick-Linie (28) gegenüber einer Transportlinie (18) angeordnet ist.

10. Verfahren zur Bereitstellung eines gemischten Lastträgers mit verschiedenen Artikeln, die auf Lastträgern (14) auf einer Vielzahl an Ebenen von Lagerungslinien (12) gelagert sind, die parallel zueinander angeordnet sind und sich in entgegengesetzten Richtungen von einer Transportlinie (18) und rechtwinklig zu dieser erstrecken, wobei ein Pick-Roboter (30) entlang einer Pick-Linie (28) gesteuert wird und wobei der Pick-Roboter (30) automatisch Artikel von einem ersten Lastträger (43) aufnimmt und die Artikel automatisch auf einem zweiten Lastträger (42, 44) platziert, dabei einen gemischten Lastträger bildend,
**dadurch gekennzeichnet, dass**
die Pick-Linie (28) so angeordnet ist, dass sie eine Lagerungslinie (12) auf jeder Ebene auf einer Seite einer Transportlinie (18) ersetzt.

11. Verfahren nach Anspruch 10, das außerdem das Platzieren sowohl des ersten Lastträgers (43) als auch des zweiten Lastträgers (42) in der Pick-Linie (28) während des Betriebs des Pick-Roboters (30) umfasst.

12. Verfahren nach Anspruch 10 oder 11, das außerdem das Übergeben des ersten Lastträgers (43) von der Pick-Linie (28) zu einer Rückführlinie (38), die angrenzend an die Pick-Linie (28) auf der gleichen Ebene angeordnet ist, das Abholen des ersten Lastträgers (43) auf der Rückführlinie (38) und das Transportieren desselben zurück zu einer Lagerungslinie (12) umfasst.

13. Verfahren nach einem der Ansprüche 10 bis 12, das außerdem das Transportieren eines gemischten Lastträgers (44) von der Pick-Linie (28) zu einer Ausgabeanordnung umfasst.

## Revendications

1. Agencement de stockage de marchandises à plusieurs étages comprenant une pluralité de niveaux de lignes (12) de stockage disposées parallèlement l'une à l'autre et s'étendant dans des directions opposées à partir d'une ligne (18) de transport et perpendiculairement à celle-ci, chaque ligne (12) de stockage étant agencée pour supporter une pluralité de dispositifs (14) ramasseurs de charges, et au moins une ligne (28) de prélèvement de stock disposée au moins sur un côté de la ligne (18) de transport, chaque ligne (28) de prélèvement comprenant un robot (30) de prélèvement pouvant être mis en oeuvre le long de la ligne (28) de prélèvement et au-dessus de celle-ci pour choisir des marchandises stockées sur un dispositif (43) ramasseur de charge et les placer sur un autre dispositif (42, 44) ramasseur de charge, **caractérisé en ce qu'**il comprend au moins une ligne (28) de prélèvement de stock à chaque niveau, moyennant quoi ladite ligne de prélèvement est agencée pour remplacer une ligne (12) de stockage d'un côté d'une ligne (18) de transport.

2. Agencement de stockage selon la revendication 1, dans lequel le robot (30) de prélèvement est soutenu par un support (32) de robot s'étendant le long de la ligne (28) de prélèvement, et dans lequel le robot (30) de prélèvement est agencé pour être mis en place en différentes positions le long du support (32) de robot.

3. Agencement de stockage selon la revendication 1 ou 2, dans lequel le dispositif (43) ramasseur de charge d'où choisir des marchandises et le dispositif (42) ramasseur de charge sur lequel placer des marchandises sont tous deux situés dans la ligne (28) de prélèvement.

4. Agencement de stockage selon l'une quelconque des revendications précédentes, comprenant également des lignes (38) de retour, chaque ligne de retour étant disposée adjacente à une ligne (28) de prélèvement, dans lequel chaque ligne (38) de retour comprend un convoyeur (50) de marchandises pour transporter des dispositifs ramasseurs de charges vers la ligne (18) de transport.

5. Agencement de stockage selon la revendication 4, dans lequel chaque niveau comprend au moins une ligne (28) de prélèvement et une ligne (38) de retour.

6. Agencement de stockage selon l'une quelconque des revendications précédentes, dans lequel un chariot transbordeur (20) peut être mis en oeuvre le long de chaque ligne (18) de transport.

7. Agencement de stockage selon la revendication 6, dans lequel ledit chariot transbordeur (20) porte au moins une navette (22) pouvant être mise en oeuvre depuis le chariot transbordeur (20) pour pénétrer dans lesdites lignes (12) de stockage afin de ramasser des marchandises et de les arranger.

8. Agencement de stockage selon l'une quelconque des revendications précédentes, comprenant également un monte-charge (26) agencé pour transporter des marchandises entre différents niveaux.

9. Agencement de stockage selon la revendication 8, dans lequel le monte-charge (26) est disposé à une extrémité d'une ligne (28) de prélèvement à l'opposé d'une ligne (18) de transport.

10. Procédé de fourniture d'un dispositif ramasseur de charge mixte de différents articles stockés sur des dispositifs (14) ramasseurs de charges sur une pluralité de niveaux de lignes (12) de stockage disposées parallèlement l'une à l'autre et s'étendant dans des directions opposées à partir d'une ligne (18) de transport et perpendiculairement à celle-ci, avec un robot (30) de prélèvement fonctionnant le long d'une ligne (28) de prélèvement et le robot (30) de prélèvement ramassant automatiquement les articles dans un premier dispositif (43) ramasseur de charge et plaçant automatiquement les articles sur un second dispositif (42, 44) ramasseur de charge en constituant un dispositif ramasseur de charge mixte,
**caractérisé en ce que** la ligne (28) de prélèvement est agencée pour remplacer une ligne (12) de stockage d'un côté d'une ligne (18) de transport.

11. Procédé selon la revendication 10, comprenant également l'opération consistant à placer à la fois le premier dispositif (43) ramasseur de charge et le second dispositif (42) ramasseur de charge dans la ligne (28) de prélèvement pendant le fonctionnement du robot (30) de prélèvement.

12. Procédé selon la revendication 10 ou 11, comprenant également les opérations consistant à transférer le premier dispositif (43) ramasseur de charge de ladite ligne (28) de prélèvement vers une ligne (38) de retour disposée adjacente à la ligne (28) de prélèvement au même niveau, aller prendre ledit premier dispositif (43) ramasseur de charge sur ladite ligne (38) de retour et le ramener à une ligne (12) de stockage.

13. Procédé selon l'une quelconque des revendications 10 à 12, comprenant également l'opération consistant à transporter un dispositif (44) ramasseur de charge mixte de ladite ligne (28) de prélèvement à un agencement de sortie.
